# EUROPEAN PATENT SPECIFICATION

(11) **EP 2 069 426 B1**
(45) Date of publication and mention of the grant of the patent: **25.08.2010**
(21) Application number: 07818085.8
(22) Date of filing: 10.09.2007
(51) Int. Cl.: C08J 9/00, F16L 59/14

(54) **THERMAL INSULATING MATERIAL**
WÄRMEISOLIERENDES MATERIAL
MATÉRIAU D'ISOLATION THERMIQUE

(30) Priority: 11.09.2006 EP 06018950; 17.04.2007 EP 07007753
(43) Date of publication of application: 17.06.2009
(73) Proprietor: DSM IP Assets B.V., 6411 TE Heerlen (NL)
(72) Inventor: PATEL, Jagdish, Ramanlel, 6114 GC Susteren (NL); TWIGG, Christopher, Michael, 6133 WL Sittard (NL); VAN DUIN, Martin, 6134 AC Sittard (NL)
(74) Representative: Mooij, Johannes Jacobus
(86) International application number: PCT/EP2007/007866
(87) International publication number: WO 2008/031545

(56) References cited:
- EP-A- 1 323 779
- US-A1- 2004 026 653
- US-A1- 2005 075 437

## Description

The invention relates to a thermal insulation material, in particular a thermal insulation material for sub sea pipelines for transport of oil, gas and similar products.

An example which may be cited is the field of transport of petroleum products from a land-based or submarine well. In these fields there are often problems of heat exchange and of maintaining the temperature of the transported products. This is because poor insulation can cause a variety of disadvantages. For example, viscous products are transported at relatively high temperature. Poor insulation combined with a lower-temperature environment brings about a lowering of temperature, an increase in the viscosity of the transported product, a slowing of flow rate, which can even result in deposition, or gelling and plugging of the conduit, with serious consequences if shutdown of production results.

It is therefore necessary to provide thermal insulation for pipelines serving for the transport of materials, in particular relatively viscous liquid materials, by using insulating materials which are easy to process at the actual point of application. A pipeline that is to be placed under water and at great depths, for example 500 - 3000 m, will be subjected to great hydrostatic pressures that known pipeline insulation materials having the required level of thermal insulation do not manage without collapsing. Alternatively insulation materials that are currently able to withstand pressures associated with great depths typically have inferior insulation properties.

An insulation comprising an elastomer filled with a gas containing filler is known from US4824705. This patent claims an insulated pipe assembly comprising a layer of rubber around a pipe containing 30 - 70 vol % of cork. Cork comprises about 50 vol % of hollow space. The rubber claimed in US4824705 therefore comprises about 15 - 35 vol % of hollow space. This resulted in pipeline insulation with a corresponding theoretical conductivity of about 0.14 W/mK to 0.08 W/mK.

These insulation materials nevertheless exhibit the disadvantage of not being able to be used below a depth of 200 to 300 meters, that is to say at a pressure of greater than 2 to 3MPa, beyond which pressure the cork is compressed such that the remaining hollow space is insufficient to keep the total amount of hollow space above the required level to facilitate a thermal insulation value equal to or lower than 0.15 W/mK.

An alternative solution is disclosed in US5476343. US 5476343 discloses ebonite filled with cork. Due to its higher hardness the composite might be able to withstand compression to a satisfying amount, but a sufficiently isolating layer requires a certain thickness of that layer. The application of a thick layer of cork filled ebonite is not possible due to the exothermal heat released during curing of ebonite.

The invention seeks to provide a thermal insulation material consisting of a composite comprising a thermoset elastomer and a filler comprising one or more hollow spaces such that the total volume of the hollow spaces occupies more than 10 vol. % of the volume of the composite for a pipeline that can be used under an increased hydrostatic pressure, preferably of more than 500 meter of water.

This aim is reached by an elastomer which is cured in the presence of a peroxide and a co-agent.

With a thermal insulation according to the invention a thermal conductivity of an insulated pipeline under more than 500 meter water can be obtained that is less than 0.1 W/mK

Preferably the composition, and in particular the amount of peroxide and co-agent, is chosen such that the compressive modulus of the composite with the cured elastomer, measured in accordance with ISO 604 is at least 100 MPa, preferably at least 200 MPa and most preferably at least 500 MPa.

The material of the invention comprises a filler with one or more hollow spaces, such that the total volume of the hollow spaces occupies more than 10 vol. % of the volume of the composite. Generally, the total hollow space will be between 10 and 40 vol. % of the composite; Less than 10 vol. % results in a too high thermal conductivity, while for more than 40 vol. % the crosslink density must be sufficiently high enough to reach a compressive modulus of more than 500 MPa, that the elastomer becomes too brittle. Even better insulation properties are obtained with a total volume of hollow spaces between 25 and 40 vol. %.

Suitable fillers for the insulating material of the invention, comprising one or more hollow spaces are cork, hollow micro beads from ceramic, glass, polymers (e.g. acrylonitril), plastics or combinations thereof. Hollow spaces filled with air or an insulating gas created with a blowing agent in a matrix with a relatively high compressive modulus and strength are in this application also understood to be a filler comprising one or more hollow spaces. A preferred filler is cork.

The crosslinkable elastomer can be chosen from polyolefins, fluoropolymers, silicones, ionomers, and mixtures thereof. The polyolefin can be chosen from polydiene homopolymers and copolymers, polyethylenes, ethylene-propylene copolymers, ethylene-butylene copolymers, polyisoprenes, polybutadienes, polystyrenebutadienes, polyethylenebutadienes, ethylene-propylene-diene terpolymers, fluorinated polymers thereof, and mixtures thereof. The fluoropolymer can be chosen from fluorinated ethylene-propylene copolymers and fluorinated ethylene-propylene-diene terpolymers.

Preferably the crosslinkable elastomer is an ethylene α-olefin copolymer, preferably an amorphous copolymer with a C2 content of less than 55 wt%, further comprising a non-conjugated polyene or diene. This has the advantage that a higher hardness than expected on the basis of the amount of peroxide can be obtained. Examples of non-conjugated polyenes are 5-ethyliden-2-norbomene (ENB), 5-vinyl-2-norbornene (VNB), dicyclopentadiene (DCPD), 1,4 hexadiene or mixtures thereof. Preferably ENB, or a mixture thereof is used because of the high amount that can be built in without significant gelation or fouling in the reactor. The Mooney of the copolymer comprising a non-conjugated polyene or diene (EPDM) preferably is between 30 ML91+4@125 C) and 60 ML(1+8 @ 150 C).

The non-conjugated polyene may be present in the elastomeric polymer in an amount of between 3 and 35 wt %, preferably 4 to 15 wt %, most preferably more than 9 wt %. The preparation of the crosslinable elastomer is known to the person skilled in the art. The elastomer can for instance be prepared by polymerization with the help of a Ziegler-Natta catalyst or a metallocene catalyst.

The co-agent can be solid or liquid, chosen from monofunctional, difunctional, and polyfunctional unsaturated carboxylate metallic compounds, , polyamides of unsaturated carboxylic acids, esteramides of unsaturated carboxylic acids, bismaleimides, allyl esters of cyanurates, allyl esters of isocyanurates, allyl esters of aromatic acids, liquid vinyl polydienes, mono- and polyunsaturated polycarboxylic acids, anhydrides of mono- and polyunsaturated polycarboxylic acids, monoesters and polyesters of mono- and polyunsaturated polycarboxylic acids, monoamides and polyamides of mono- and polyunsaturated polycarboxylic acids, esteramides and polyesteramides of mono- and polyunsaturated polycarboxylic acids, and mixtures thereof. Preferred co-agents are low molecular weight high vinyl polybutadiene (e.g. Ricon 154D), trimethylol propane trimethacrylate (TMPT) and N,N'-(M-phenylene) dimaleimide (EPDM carrier) (HVA-2).

A compressive modulus of more than 100 MPa, even more than 150 MPa can be obtained with a co-agent comprising either TMPT or low molecular weight high vinyl polybutadiene. Combinations of co-agents are also possible to optimize processability and compatibility.

The amount of co agent used in the material of the invention generally is between 10 and 85 parts per hundred parts of rubber (PPHR), preferably between 50 and 75 PPHR.

The peroxide can be a dialkyl peroxide crosslinking initiator chosen from di-t-amyl peroxide, di-t-butyl peroxide, t-butyl cumyl peroxide, di-cumyl peroxide, di(2-t-buylperoxyisopropyl)benzene, 2,5-dimethyl-2,5-di(t-butylperoxy)hexane, 2,5-dimethyl-2,5-di(t-butylperoxy)hexyne-3,1,1-di(t-butylperoxy)-3,3,5-trimethylcyclohexane, 4,4-di(t-butylperoxy)-n-butylvalerate, and mixtures thereof.

The amount of peroxide typically varies between 6 and 60 PPHR, but, in respect of the high costs of peroxides preferably varies between 6 and 10 PPHR.

Other additives in the material of the invention include antioxidants, light stabilizers, UV absorbers, moisture scavengers, photoinitiators, solid fillers like clay and carbon black and silane coupling agents. The composition can be crosslinked and/or intercrosslinked separately, sequentially, or simultaneously by at least one means chose from heating, ultrasonic waves, and electromagnetic radiations comprising X-radiation, γ-radiation, electron beam, ultraviolet radiation, visual radiation, and infrared radiation.

The insulating material of the invention can preferably be prepared by mixing the rubber, the co-agent(s), and the other additives on a mixing device e.g. an internal intermeshing or tangential internal mixer or a two roll mixer. After the rubber has banded the peroxide, subsequently the filler comprising the one or more hollow spaces is added to the mixture, preferably on a two roll mixer. The obtained mixture is pressureless cured under conditions known in the art, depending on the curing system used.

The invention further relates to the use of the thermal insulation material according to the invention for a deep sea pipe and a pipe comprising the insulation material according to the invention.

### Experiments

A masterbatch comprising all components mentioned in table 1 but the Perkadox 14-40, the Expancel and the Cork were mixed on a two roll mill. Once the rubber in banded the Perkadox is added to the mixture followed by the Expancel and Cork. The resulting mixture was pressureless cured at 180 C for 12 minutes.

The resulting insulation material had a density of 500 kg/m³ and a K value of 0.076 W/m.K.

**Table 1.**

| Material | PHR | D | PBV |
|---|---|---|---|
| | | | |
| Keltan 314 | 100 | 0.87 | 114.94 |
| TMPT | 40 | 2.22 | 32.80 |
| CaCO3 | 200 | 2.60 | 76.92 |
| N990 | 10 | 1.80 | 5.56 |
| Expancel 009DU80 | 20 | 2.40 | 8.33 |
| TMQ | 1 | 1.08 | 0.93 |
| Vulkanox MB2 | 1 | 1.40 | 0.71 |
| PEG 4000 | 4 | 1.21 | 3.31 |
| Perkadox 14-40 | 6 | 0.92 | 6.52 |
| Cork, 3-4mm | 150 | 0.25 | 600.00 |

| | | | |
|---|---|---|---|
| D= Density; PBV= Parts by Volume | | | |

## Claims

1. Thermal insulation material consisting of a composite comprising a thermoset elastomer and a filler comprising one or more hollow spaces such that the total volume of the hollow spaces occupies more than 10 vol. % of the volume of the composite **characterized in that** the elastomer is cured in the presence of a peroxide and a co-agent.

2. Thermal insulation material according to claim 1, wherein the amounts of peroxide and co-agents are chosen such that the compressive modulus of the composite with the cured elastomer, measured in accordance with ISO 604, is at least 100 MPa.

3. Thermal insulation material according to claim 1, wherein the elastomer is an ethylene α-olefin copolymer, further comprising a non-conjugated polyene.

4. Thermal insulation material according to claim 3, wherein the α-olefin is propylene and the non-conjugated polyene is 5-ethyliden-2-norbornene (ENB).

5. Thermal insulation material according to claims 1 or 2, wherein the co-agent is a mixture of vinyl polybutadiene and zinc methacrylate.

6. Thermal insulation material according to any of the preceding claims, wherein the filler is cork.

7. Use of the thermal insulation material as defined in any of the preceding claims for a deep sea pipe.

8. A pipe comprising the insulation material according to any of the claims 1 - 6.

## Patentansprüche

1. Wärmeisolationsmaterial, bestehend aus einem Verbundwerkstoff, umfassend ein wärmehärtendes Elastomer und einen Füllstoff mit einem oder mehreren Hohlräumen, so daß das Gesamtvolumen der Hohlräume mehr als 10 Vol.-% des Volumens des Verbundwerkstoffs einnimmt, **dadurch gekennzeichnet, daß** die Härtung des Elastomers in Gegenwart eines Peroxids und eines Coagens erfolgt.

2. Wärmeisolationsmaterial nach Anspruch 1, wobei die Mengen an Peroxid und Coagentien so gewählt sind, daß der gemäß ISO 604 gemessene Druckmodul des Verbundwerkstoffs mit dem gehärteten Elastomer mindestens 100 MPa beträgt.

3. Wärmeisolationsmaterial nach Anspruch 1, wobei es sich bei dem Elastomer um ein Ethylen-α-Olefin-Copolymer, das ferner ein nichtkonjugiertes Polyen umfaßt, handelt.

4. Wärmeisolationsmaterial nach Anspruch 3, wobei es sich bei dem α-Olefin um Propylen handelt und es sich bei dem nichtkonjugierten Polyen um 5-Ethyliden-2-norbornen (ENB) handelt.

5. Wärmeisolationsmaterial nach Anspruch 1 oder 2, wobei es sich bei dem Coagens um eine Mischung von Vinylpolybutadien und Zinkmethacrylat handelt.

6. Wärmeisolationsmaterial nach einem der vorhergehenden Ansprüche, wobei es sich bei dem Füllstoff um Kork handelt.

7. Verwendung des Wärmeisolationsmaterials nach einem der vorhergehenden Ansprüche für ein Tiefseerohr.

8. Rohr, umfassend das Isolationsmaterial nach einem der Ansprüche 1 - 6.

## Revendications

1. Matériau d'isolation thermique constitué d'un composite comprenant un élastomère thermodurcissable et une charge comprenant un ou plusieurs espaces creux de manière à ce que le volume total des espaces creux occupe plus de 10 % en volume du volume du composite, **caractérisé en ce que** l'élastomère est durci en présence d'un peroxyde et d'un co-agent.

2. Matériau d'isolation thermique selon la revendication 1, dans lequel les quantités de peroxyde et de co-agents sont choisies de manière à ce que le module de compression du composite avec l'élastomère durci, mesuré selon ISO 604, soit d'au moins 100 MPa.

3. Matériau d'isolation thermique selon la revendication 1, dans lequel l'élastomère est un copolymère éthylène-α-oléfine, qui comprend également un polyène non conjugué.

4. Matériau d'isolation thermique selon la revendication 3, dans lequel l'α-oléfine est le propylène et le polyène non-conjugué est le 5-éthylidène-2-norbornène (ENB).

5. Matériau d'isolation thermique selon la revendication 1 ou 2, dans lequel le co-agent est un mélange de vinylpolybutadiène et de méthacrylate de zinc.

6. Matériau d'isolation thermique selon l'une quelconque des revendications précédentes, dans lequel la charge est du liège.

7. Utilisation du matériau d'isolation thermique selon l'une quelconque des revendications précédentes pour un tuyau de grand fond.

8. Tuyau comprenant le matériau d'isolation selon l'une quelconque des revendications 1 à 6.
